Europäisches Patentamt

European Patent Office

Office européen des brevets

(19)

(11) Numéro de publication : **0 100 277
B1**

# (12) FASCICULE DE BREVET EUROPÉEN

(45) Date de publication du fascicule du brevet :
01.10.86

(21) Numéro de dépôt : 83401505.9

(22) Date de dépôt : 22.07.83

(51) Int. Cl.⁴ : **C 03 B 33/02**

(54) **Dispositifs de commande des éléments réalisant la découpe longitudinale d'un ruban de verre en déplacement.**

(30) Priorité : 27.07.82 FR 8213115

(43) Date de publication de la demande :
08.02.84 Bulletin 84/06

(45) Mention de la délivrance du brevet :
01.10.86 Bulletin 86/40

(84) Etats contractants désignés :
BE DE GB IT

(56) Documents cités :
FR-A- 1 570 505
US-A- 4 170 159

(73) Titulaire : **SOCIETE GENERALE POUR LES TECHNI-
QUES NOUVELLES S.G.N. Société anonyme dite:
1, rue des Hérons Montigny-le-Bretonneux
F-78184 Saint-Quentin en Yvelines Cedex (FR)**

(72) Inventeur : **Gabillet, Maurice
53 rue d'Aguesseau
F-92100 Boulogne Billancourt (FR)**

(74) Mandataire : **Combe, André et al
CABINET BEAU DE LOMENIE 55 rue d'Amsterdam
F-75008 Paris (FR)**

## Description

La présente invention concerne les dispositifs de commande des éléments réalisant le découpage longitudinal d'un ruban de verre en déplacement.

Les feuilles de verre de différentes dimensions sont actuellement très souvent directement tracées sur le ruban de verre élaboré par le procédé float glass ; ce ruban de grande largeur défile sur le chemin de convoyage à une vitesse importante : les traits perpendiculaires au ruban sont le plus souvent tracés à intervalles précis à l'aide d'une machine spéciale disposée obliquement par rapport à l'axe du ruban.

Le tracé des traits longitudinaux est réalisé au moyen d'une série de chariots portés par un pont disposé perpendiculairement au sens de déplacement du ruban ; chaque chariot est composé d'une tête comportant un élément coupant, d'un dispositif permettant le relevage ou la descente de ladite tête et de dispositifs de commande de ces mouvements de chaque tête.

Cependant le positionnement de ces chariots le long du pont pose certains problèmes de ce que

— d'une part, le ruban de verre subit dans le temps des déplacements transversaux (ce phénomène étant connu sous le nom de dérivage)

— d'autre part, il est nécessaire de pouvoir commander individuellement, et de façon aussi automatique que possible, la position de chaque chariot.

Le but de la présente invention concerne des dispositifs permettant de résoudre ces problèmes, ces dispositifs concernant d'une part le déplacement individuel des chariots et, d'autre part, le déplacement de l'ensemble desdits chariots.

Ainsi il est apparu utile de pouvoir positionner convenablement à chaque instant chacun des chariots de découpe longitudinale du ruban, le long du pont. Ce positionnement doit se réaliser alors que l'élément coupant du chariot est « relevé », c'est-à-dire n'est plus en contact avec la surface de verre.

Un dispositif de déplacement individuel de chariots porte-outils assurant la découpe longitudinale d'un ruban de verre en déplacement, lesdits chariots étant solidarisés à une barre de synchronisation est connu du US-A-4170159.

Ce dispositif est, selon l'invention, caractérisé en ce qu'il comporte :

— un chariot manipulateur qui coulisse sur un rail de guidage disposé au-dessus des chariots et à distance convenable de ceux-ci

— et un motoréducteur relié audit chariot manipulateur par un câble sans fin permettant le positionnement exact et un déplacement commandé dudit chariot,
ledit chariot réducteur étant pourvu de moyens permettant, lorsque ledit chariot est positionné au-dessus d'un chariot porte-outil, de désolidariser ledit chariot porte-outil d'avec la (ou les) barre de synchronisation avec laquelle il est solidaire, puis d'entraîner avec lui ledit chariot porte-outil pour positionner convenablement ce dernier, et enfin le moyen ayant réalisé ladite désolidarisation est relâché de façon à solidariser ledit chariot porte-outil avec la (ou les) barre de synchronisation.

Le dispositif relatif à un mouvement de l'ensemble des chariots est conçu de façon à éliminer le phénomène de dévirage.

Dans ce but, le dispositif conforme à la revendication 1 comporte un dispositif assurant le déplacement de l'ensemble de chariots porte-outils munis de dispositifs de déplacement individuels selon la revendication 1, lesdits chariots étant solidarisés entre eux au moyen d'au moins une barre de synchronisation en vue de suivre le dévirage du ruban de verre, le dispositif comportant :

— un moyen de repérage de la position d'un bord du ruban de verre par rapport à un chariot de découpe appelé chariot solidaire

— et la commande à partir de l'information donnée par ce moyen de repérage, d'un chariot solidaire qui, agissant sur une barre de synchronisation, provoque le déplacement, dans le sens souhaité, de l'ensemble des chariots, ledit déplacement étant effectué à une vitesse telle que, par rapport à la vitesse de déplacement du verre, le trait de découpe reste dans les limites déterminées pour le faux équerrage.

Le moyen de repérage de la position d'un bord du ruban par rapport à un dispositif de coupe à un instant donné peut être de nature quelconque mécanique ou optique. On préfère cependant l'utilisation de deux capteurs optiques distants de 2 à 3 millimètres environ qui déterminent si le ruban de verre s'interpose sur le trajet lumineux émis par une source convenable et frappant lesdits capteurs. Bien évidemment, la position d'équilibre se trouve réalisée lorsque l'un seulement des capteurs est atteint par un rayon lumineux n'ayant pas traversé le ruban de verre.

Lorsque ledit moyen de repérage détecte un dévirage du ruban de verre, cette détection ayant lieu lorsque les deux capteurs sont frappés par des rayons lumineux de même nature (c'est-à-dire qui sont soit tous les deux passés à travers le ruban de verre, soit tous les deux passés en dehors du ruban de verre), le moyen de repérage envoie un signal convenable à un intégrateur qui va commander le déplacement simultané contrôlé de l'ensemble des chariots. Ce déplacement, effectué par exemple par translation d'une barre de synchronisation de laquelle tous les chariots sont solidaires, doit se faire à une vitesse maximale déterminée. Cette vitesse maximale est telle qu'à tout instant dudit déplacement l'angle fait entre une ligne théorique perpendiculaire au sens du déplacement du ruban de verre et la ligne de coupe des chariots est au plus égal à α, α étant déterminé à l'avance. Comme les glaces découpées auront généralement une forme générale rectangulaire, ledit angle α devra être très proche d'un angle droit, c'est-à-dire que l'on tolérera une certaine différence (dite faux équerrage) entre α et l'angle droit. On conçoit que cette vitesse de déplacement maximale possible dépende de la vitesse de déplacement longitudinal du ruban de verre, c'est dire que, lorsque le moyen de repérage enverra un signal de dévirage, un intégrateur devra, en tenant compte de la vitesse de déplacement du ruban et des tolérances de l'équerrage pour les découpes effectuées, programmer la vitesse de déplacement de l'ensemble des chariots.

L'invention sera mieux comprise en se référant aux figures 1, 2 et 3 qui illustrent de façon non limitative une mise en œuvre de l'invention.

La figure 1 est une vue en élévation frontale du pont de tracé longitudinal avec représentation du mécanisme de positionnement des outils.

La figure 2 est une coupe du dispositif de décrochage des porte-outils de la barre de synchronisation.

La figure 3 est une vue du dispositif de correction de position en fonction des mouvements transversaux de la feuille de verre.

Sur les différentes figures et dans le texte, les numéros utilisés pour repérer une pièce déterminée sont identiques.

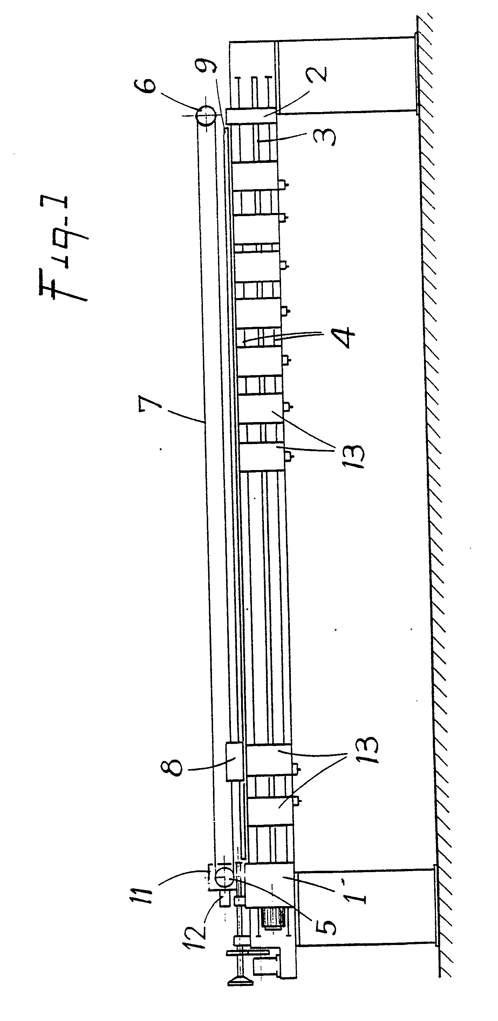

On se réfère d'abord à la figure 1.

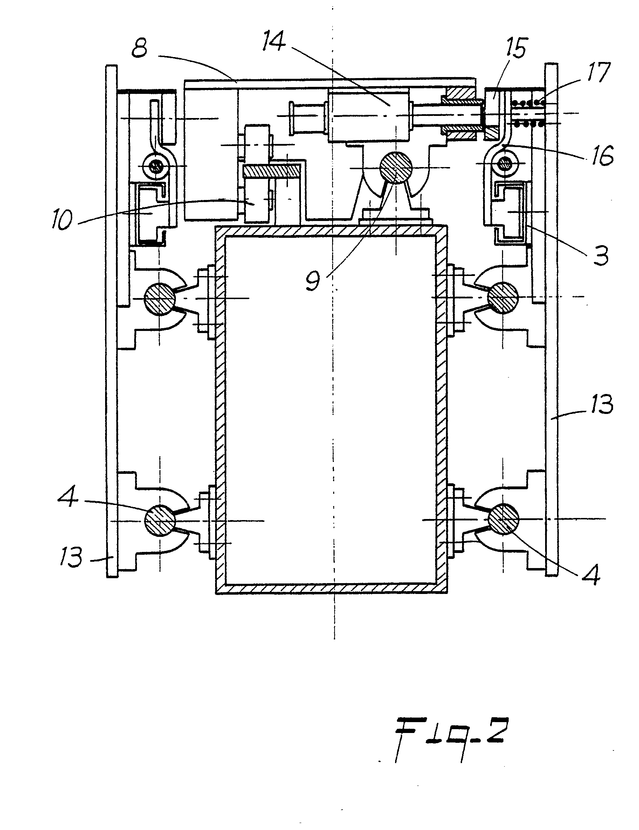

Deux chariots solidaires 1 et 2 reliés par deux barres symétriques 3 (éventuellement une seule) peuvent coulisser librement sur deux paires de rails de guidage cylindriques 4. Le chariot 1 porte une poulie motrice 5 et le chariot 2 une poulie réceptrice 6 autour desquelles peut s'enrouler ou se dérouler un câble 7. Les extrémités du câble 7 sont fixées sur le chariot manipulateur 8 qui coulisse sur le rail de guidage 9 tout en s'appuyant sur la poutre fixe par l'intermédiaire de galets 10 (voir figure 2).

Le motoréducteur à deux vitesses 11 entraîne le chariot manipulateur 8 par l'intermédiaire du câble 7, la position du chariot étant donnée par le codeur 12 relié au moteur 11.

Les chariots porte-outils 13, comme les deux chariots solidaires, coulissent librement dans les rails cylindriques 4. Lorsque le chariot manipulateur est positionné face au chariot porte-outil que l'on veut déplacer, un poussoir constitué par le noyau d'un électro-aimant 14 vient se loger dans un trou 15 prévu à cet effet sur chaque chariot porte-outil, rendant ainsi les deux chariots solidaires. Après déplacement de la valeur adéquate, le chariot porte-outil est décroché du chariot manipulateur qui peut alors effectuer le positionnement d'un autre chariot porte-outil.

On se réfère plus précisément maintenant à la figure 2 afin de mieux comprendre le mode d'action du dispositif selon l'invention.

Il a été précisé plus haut que les deux chariots solidaires 1 et 2 étaient reliés par une ou deux barres de synchronisation 3. Cette barre permet, après positionnement, de relier tous les chariots porte-outils entre eux rigidement, donc de les déplacer simultanément en agissant sur le chariot 1 ou 2. Pour assurer l'accrochage du chariot 13 à ou aux barres de synchronisation 3, un doigt basculeur 16 fixé sur chaque chariot 13 est normalement appliqué fortement sur la barre creuse de synchronisation par l'intermédiaire d'un ressort 17. Lorsque l'on veut déplacer le chariot porte-outil, le noyau de l'électro-aimant 14 décrit au paragraphe précédent vient annuler l'action du ressort, autorisant ainsi le déplacement dudit chariot 13.

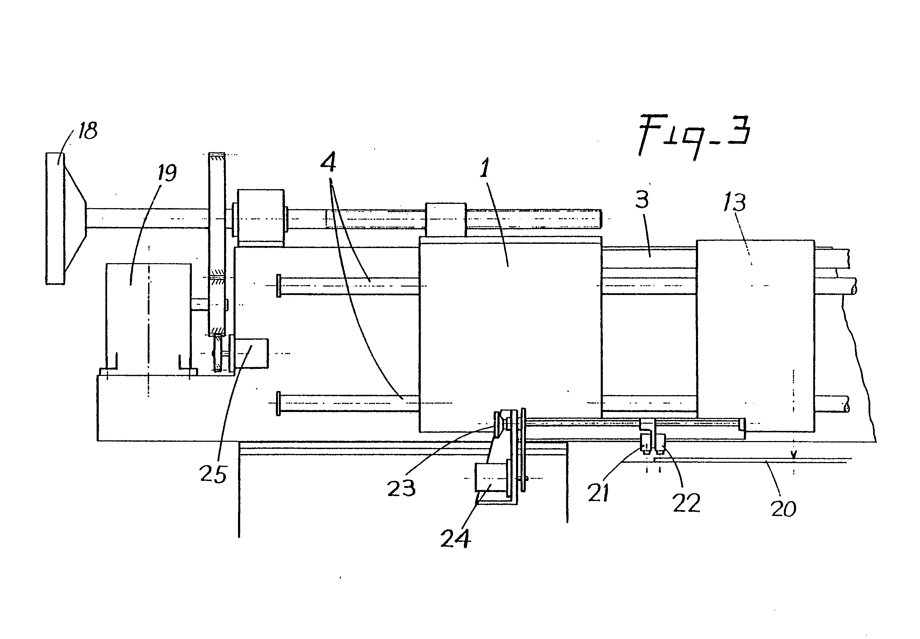

On se réfère maintenant à la figure 3 qui illustre le dispositif utilisé pour corriger le dévirage.

Il a été indiqué plus haut que tous les chariots porte-outils 13 pouvaient être reliés rigidement les uns aux autres par une barre de synchronisation repère 3. En agissant sur le chariot solidaire 1 soit manuellement par l'intermédiaire du volant 18, soit automatiquement par l'intermédiaire du motoréducteur 19, on peut asservir la position de l'ensemble des outils de tracé à la position transversale du ruban 20. La position du bord du ruban est repérée à partir de deux cellules 21 et 22 que l'on peut déplacer à l'aide d'une vis sans fin 23, en fonction de la largeur brute de ce ruban. Cette vis sans fin est reliée à un codeur 24. L'information de la position courante de ce bord est transmise au motoréducteur 19 qui corrige insensiblement l'erreur de position constatée pour ne pas fausser la linéarité du trait. Cette correction est mesurée par le codeur 25.

**Revendications**

1. Dispositif de déplacement individuel de chariots porte-outils assurant la découpe longitudinale d'un ruban de verre en déplacement, lesdits chariots étant solidarisés à une barre de synchronisation (3), caractérisé en ce qu'il comporte

un chariot manipulateur (8) qui coulisse sur un rail de guidage (9) disposé au-dessus des chariots porte-outils et à une distance convenable de ceux-ci

un motoréducteur relié audit manipulateur par un câble (7) sans fin permettant le positionnement exact et un déplacement commandé dudit chariot, ledit chariot manipulateur étant pourvu de moyens permettant, lorsque ledit chariot manipulateur est positionné au-dessus d'un chariot porte-outil, de désolidariser ledit chariot porte-outil d'avec la barre de synchronisation avec laquelle il est solidaire, puis d'entraîner avec lui ledit chariot porte-outil pour le positionner convenablement, puis de resolidariser ledit chariot porte-outil avec la barre de synchronisation.

2. Dispositif assurant le déplacement de l'ensemble de chariots porte-outils munis de dispositifs de déplacement individuels selon la revendication 1, lesdits chariots étant solidarisés entre eux au moyen d'au moins une barre de synchronisation (3), en vue de suivre le dévirage du ruban de verre, le dispositif comportant

un moyen de repérage (21-22) de la position d'un bord du ruban de verre par rapport à un chariot porteur de l'outil de découpe dudit chariot solidaire

et la commande, à partir de l'information donnée par ledit moyen de repérage, d'un chariot solidaire (1) (2) qui, agissant sur ladite barre de synchronisation, provoque le déplacement de l'ensemble des chariots, ledit déplacement étant effectué à une vitesse compatible avec l'équerrage choisi pour la découpe considérée.

## Claims

1. Device for individually moving tool-holding carriages ensuring the longitudinal cutting of a moving strip of glass, said carriages being integral with a synchronisation rod (3), characterized in that it comprises :

a handling carriage (8) sliding on a guiding rail (9) placed above the tool-holding carriages and at a suitable distance thereof

a reduced gear transmission connected to said handling device by an endless cable (7) permitting accurate positioning and a controlled displacement of the carriage, said handling carriage being provided with means permitting, when said handling carriage is positioned above a tool-holding carriage, to separate said tool-holding carriage from the synchronization rod with which it is integral, then to carry with it the tool-holding carriage in order to suitably position it, then to re-connect said tool-holding carriage to the synchronization rod.

2. Device ensuring the displacement of the assembly of tool-holding carriages provided with individual moving devices according to claim 1, said carriages being interconnected by means of at least one synchronization rod (3), in order to follow the curving of the strip of glass, the device comprising

a means (21, 22) for finding the position of an edge of the glass strip with respect to a carriage carrying the cutting tool of said integral carriage,

and the control, from the information supplied by said finding means, of an integral carriage (1) (2) which, when it acts on said synchronization rod, causes the displacement of the carriages assembly, said displacement being effectued at a speed compatible with the squaring selected for the cutting considered.

## Patentansprüche

1. Vorrichtung zum getrennten Verschieben von Werkzeugträgerschlitten, mit denen ein bewegliches Glasband in Längsrichtung geschnitten wird, wobei die Schlitten an einer Synchronisationsstange (3) befestigt sind, gekennzeichnet durch

einen Handhabungsschlitten (8), der auf einer über den Werkzeugträgerschlitten und in passendem Abstand zu diesem angeordneten Führungsschiene gleitet,

einen Getriebemotor, der über ein Endlosseil (7) mit dem Handhabungsschlitten verbunden ist und der die genaue Positionierung und gesteuerte Verschiebung des Schlittens gewährleistet, wobei der Handhabungsschlitten mit Mitteln versehen ist, die es ermöglichen, den Werkzeugträgerschlitten von der Synchronisationsstange, mit der dieser verbunden ist, zu lösen, während der Handhabungsschlitten über dem Werkzeugträgerschlitten angeordnet ist und den Werkzeugträgerschlitten mitzunehmen, um ihn geeignet zu positionieren, um abschließend den Werkzeugträgerschlitten wieder mit der Synchronisationsstange zu verbinden.

2. Vorrichtung zum Verschieben einer Gruppe von Werkzeugträgerschlitten, die mit einzelnen Verschiebevorrichtungen nach Anspruch 1 versehen sind, wobei die Schlitten untereinander mittels mindestens einer Synchronisationsstange (3) verbunden sind, um der Verschiebung des Glasbandes zu folgen, wobei die Vorrichtung aufweist :

ein Mittel (21, 22) zum Erfassen der Position des Randes des Glasbandes im Verhältnis zu einem Schneidwerkzeugträgerschlitten des besagten befestigten Schlittens und

eine Steuerung eines befestigten Schlittens (1, 2), die ausgehend von der Erfassungsvorrichtung abgegebenen Information auf die Synchronisationsstange einwirkt und die Verschiebung der Gruppe der Schlitten hervorruft, wobei die Verschiebung mit einer Geschwindigkeit erfolgt, die mit der Winkelhaltigkeit des betreffenden Schnitts kompatibel ist.

Fig-1

Fig. 2

Fig-3